# FASCICULE DE BREVET EUROPEEN

(11) **EP 4 198 359 B1**
(45) Date de publication et mention de la délivrance du brevet: **17.07.2024**
(21) Numéro de dépôt: 22203715.2
(22) Date de dépôt: 26.10.2022
(51) Int. Cl.: F16K 21/06, F16K 21/12, E03C 1/04, F16K 1/44, F16K 11/074

(54) **MECANISME A FERMETURE AUTOMATIQUE TEMPORISEE A FONCTIONNEMENT SOUPLE POUR ROBINET MITIGEUR ET ROBINET MITIGEUR LE COMPRENANT**
AUTOMATISCHER ZEITGESTEUERTER VERSCHLUSSMECHANISMUS MIT FLEXIBLER BETÄTIGUNG FÜR EINE MISCHBATTERIE UND MISCHBATTERIE DAMIT
FLEXIBLE TIME-CONTROLLED SELF-CLOSING MECHANISM FOR A MIXING VALVE AND MIXING VALVE COMPRISING SAME

(30) Priorité: 20.12.2021 FR 2113946
(43) Date de publication de la demande: 21.06.2023
(73) Titulaire: Delabie, 80130 Friville Escarbotin (FR)
(72) Inventeur: Dumont, Geoffrey, 76260 Melleville (FR)
(74) Mandataire: Cabinet Chaillot

(56) Documents cités:
- EP-A1- 0 149 373
- EP-A1- 0 439 403
- EP-A1- 2 674 651
- FR-A1- 3 106 180

## Description

La présente invention concerne le domaine des robinets mitigeurs tels que pour douche ou lavabo, et porte en particulier sur un mécanisme à fermeture automatique temporisée pour robinet mitigeur qui permet d'avoir un très faible effort de manoeuvre (c'est-à-dire un fonctionnement souple) et sur un robinet mitigeur le comprenant.

Les robinets mitigeurs temporisés pour douche ou lavabo existants comprennent généralement, d'une part, un corps de forme sensiblement cylindrique dans lequel débouchent des arrivées d'eau froide et d'eau chaude et depuis lequel s'étend une sortie d'eau mitigée, et, d'autre part, un mécanisme, généralement en forme de cartouche, qui est inséré dans ce corps. Ce mécanisme, amovible et interchangeable, est généralement surmonté d'un bouton de commande, de type bouton-poussoir, commandant la sortie d'eau pendant un temps prédéterminé, l'ouverture du robinet étant obtenue en exerçant une poussée sur le bouton de commande et la fermeture du robinet se produisant automatiquement au bout d'une certaine durée après que l'appui sur le bouton de commande a été relâché. En outre, la rotation du bouton de commande dans le sens horaire ou antihoraire permet à l'utilisateur de régler la température de l'eau mitigée.

De tels robinets mitigeurs sont surtout destinés aux collectivités et aux lieux publics, car ils permettent une économie d'eau. Cependant, la plupart de ces robinets ont pour inconvénient de pouvoir être maintenus ouverts en continu par un utilisateur peu scrupuleux, soit manuellement, soit par différents artifices, ceci annulant bien évidemment le principal avantage de ce robinet. Pour pallier cet inconvénient, on connaît des mécanismes qui se ferment automatiquement même si on maintient une pression sur le bouton de commande (par exemple, les demandes de brevet français FR330315A, FR334979A et FR2844021A1).

Il existe d'autres types de mécanismes à fermeture automatique temporisée pour robinet mitigeur de lavabo ou de douche (par exemple, les demandes de brevet français FR2683606A1, FR2579714A1 et FR2410196A1). Cependant, ceux-ci ont généralement pour inconvénient de nécessiter un effort d'appui ou de rotation assez important sur le bouton de commande pour commander l'ouverture du robinet et le réglage de la température de l'eau mitigée, ce qui les rend difficiles à activer pour les enfants et les personnes âgées. En outre, ces mécanismes existants comprennent de nombreux composants, ce qui aboutit à un coût de fabrication élevé et rend le démontage complexe en cas de maintenance. EP2674651A1 décrit un autre mécanisme selon l'état antérieur de la technique.

La présente invention vise à résoudre les inconvénients de l'état antérieur de la technique, en proposant un mécanisme à fermeture automatique temporisée pour robinet mitigeur, comprenant des premier et second clapets auxiliaires, le second clapet auxiliaire permettant une décompression à l'intérieur du mécanisme afin de permettre à l'utilisateur d'actionner sans effort le bouton de commande, et le premier clapet auxiliaire ne s'ouvrant que lorsque l'utilisateur relâche la poussée sur le bouton de commande de manière à éviter que de l'eau ne s'écoule du robinet mitigeur lorsque le bouton de commande est maintenu enfoncé.

La présente invention a donc pour objet un mécanisme à fermeture automatique temporisée pour un robinet mitigeur, comprenant : un corps de tête creux à l'intérieur duquel est apte à coulisser axialement une tige de commande creuse dont l'extrémité supérieure débouche du corps de tête creux pour recevoir un bouton de commande ; un pot de temporisation disposé sous le corps de tête et relié à celui-ci à l'aide d'une entretoise, ledit pot de temporisation comprenant, en partie supérieure, une paroi horizontale ayant un orifice axial traversé par la tige de commande; un sélecteur de température ménagé de manière étanche dans la partie inférieure du pot de temporisation, le sélecteur de température comprenant, en partie inférieure, une platine dans laquelle est formée au moins une ouverture d'entrée de fluide qui est en communication de fluide avec le pot de temporisation et est configurée pour coopérer avec une arrivée d'eau froide et une arrivée d'eau chaude du robinet mitigeur de façon à mitiger la température de l'eau en fonction de la position angulaire de la platine du sélecteur de température, ledit sélecteur de température comprenant, en partie supérieure, une section tubulaire avec un crantage latéral interne, la partie inférieure de la tige de commande comprenant un crantage latéral externe en prise avec le crantage latéral interne de la section tubulaire de telle sorte qu'une rotation de la tige de commande entraîne la rotation du sélecteur de température ; un piston de temporisation monobloc en élastomère disposé dans le pot de temporisation et apte à coulisser sur la tige de commande, ledit piston de temporisation ayant au moins une lèvre interne en contact avec la surface latérale externe de la tige de commande et une lèvre externe en contact avec la surface latérale interne du pot de temporisation, la face inférieure du piston de temporisation ayant un bourrelet annulaire qui constitue un clapet principal en regard d'un siège principal ménagé sur l'extrémité supérieure de la section tubulaire du sélecteur de température ; un premier clapet auxiliaire constitué par l'extrémité inférieure de la tige de commande creuse et associé à un premier siège auxiliaire formé dans le fond de la section tubulaire du sélecteur de température, un passage étant ménagé dans le crantage latéral interne de la section tubulaire de manière à permettre un écoulement de fluide depuis le pot de temporisation vers l'extrémité inférieure de la tige de commande lorsque le clapet principal et le premier clapet auxiliaire sont ouverts ; un second clapet auxiliaire disposé sur la surface latérale externe de la tige de commande à l'intérieur du pot de temporisation et associé à un second siège auxiliaire formé sur la face inférieure de l'orifice axial du pot de temporisation, de telle sorte qu'un appui sur le bouton de commande solidaire de la tige de commande entraîne l'ouverture du second clapet auxiliaire et la fermeture du premier clapet auxiliaire, l'ouverture du second clapet auxiliaire entraînant, sous l'effet de la pression amont, la remontée du piston de temporisation dans le pot de temporisation jusqu'à venir en butée contre la partie supérieure du pot de temporisation, et de telle sorte que, lorsque l'appui sur le bouton de commande est relâché, un premier ressort de compression disposé entre le corps de tête et le bouton de commande permet un retour de la tige de commande dans sa position de repos dans laquelle le premier clapet auxiliaire est ouvert et le second clapet auxiliaire est fermé, puis un second ressort de compression disposé entre la paroi horizontale supérieure du pot de temporisation et la face supérieure du piston de temporisation permet un retour du piston de temporisation sur le siège principal ; et au moins un orifice radial de sortie ménagé dans la tige de commande au niveau de l'entretoise et permettant un écoulement du fluide en provenance de l'intérieur de la tige de commande creuse vers une sortie de fluide du robinet mitigeur.

Le mécanisme à fermeture automatique temporisée selon la présente invention comporte moins de composants par rapport à l'état antérieur de la technique, et permet ainsi d'obtenir un coût de fabrication moins élevé et un démontage moins complexe en cas de maintenance.

De façon connue, la surface latérale intérieure du pot de temporisation comporte, de préférence, au moins une strie longitudinale permettant de créer de fuite de fluide entre la partie inférieure du pot de temporisation au-dessous du piston de temporisation et la partie supérieure du pot de temporisation au-dessus du piston de temporisation, la vitesse de retour du piston de temporisation étant conditionnée par la section de la strie longitudinale. Dans la position de repos du mécanisme selon la présente invention, c'est-à-dire lorsqu'aucun appui n'est exercé sur le bouton de commande du mécanisme, la tige de commande est en position haute de telle sorte que le second clapet auxiliaire est fermé et le premier clapet auxiliaire est ouvert, et le clapet principal est fermé (c'est-à-dire, que le piston de temporisation est en position basse dans le pot de temporisation) de telle sorte que le clapet principal fermé empêche l'écoulement de fluide vers l'au moins un orifice de sortie de la tige de commande du mécanisme.

Dès qu'un utilisateur appuie sur le bouton de commande du robinet mitigeur, la tige de commande est entraînée en position basse de telle sorte que le second clapet auxiliaire s'ouvre et le premier clapet auxiliaire se ferme, l'ouverture du second clapet auxiliaire provoquant une fuite d'amorçage et la remontée du piston de temporisation dans le pot de temporisation, sous l'effet de la pression amont, jusqu'à venir en butée contre la partie supérieure du pot de temporisation, de telle sorte que le bouton de commande peut être facilement enfoncé par l'utilisateur avec un très faible effort de manoeuvre.

En outre, lorsque l'utilisateur maintient le bouton de commande enfoncé, le premier clapet auxiliaire du mécanisme selon la présente invention reste fermé, de telle sorte que le premier clapet auxiliaire fermé empêche l'écoulement de fluide vers l'au moins un orifice de sortie de la tige de commande du mécanisme. Le mécanisme selon la présente invention possède ainsi un fonctionnement antiblocage, c'est-à-dire un fonctionnement dans lequel l'eau ne peut pas d'écouler du robinet mitigeur tant que la tige de commande reste enfoncée. Lorsque l'appui sur le bouton de commande est relâché, la tige de commande revient en position haute sous l'effet du premier ressort de compression de telle sorte que le premier clapet auxiliaire s'ouvre et le second clapet auxiliaire se referme. L'eau provenant de l'ouverture d'entrée de fluide de la platine du sélecteur de température peut alors s'écouler librement vers l'extrémité inférieure de la tige de commande, puis vers l'au moins un orifice de sortie de la tige de commande. Le piston de temporisation redescend alors progressivement dans le pot de temporisation sous l'effet du second ressort de compression en étant freiné par la fuite calibrée par la strie longitudinale de la surface latérale intérieure du pot de temporisation en regard de la lèvre externe du piston. L'eau s'écoule ainsi dans la tige de commande jusqu'à ce que le clapet principal se referme en position basse du piston de temporisation, le mécanisme revenant alors dans sa position de repos. Le mécanisme selon la présente invention permet ainsi un écoulement de fluide pendant une période de temps prédéterminée.

La rotation dans le sens horaire ou antihoraire du bouton de commande, qui est solidaire de la tige de commande, par l'utilisateur entraîne la rotation de la tige de commande qui elle-même entraîne la rotation du sélecteur de température. L'utilisateur peut ainsi régler la température de l'eau mitigée s'écoulant depuis l'au moins un orifice radial de sortie du mécanisme en fonction de la position angulaire du bouton de commande, c'est-à-dire de la position angulaire de la platine du sélecteur de température qui coopère avec l'arrivée d'eau froide et l'arrivée d'eau chaude du robinet mitigeur.

Selon une caractéristique particulière de l'invention, le premier siège auxiliaire est un tronc de cône mâle placé au fond de la section tubulaire du sélecteur de température, et le premier clapet auxiliaire est un tronc de cône femelle situé à l'extrémité inférieure de la tige de commande creuse.

Ainsi, lorsque la tige de commande est en position basse, le tronc de cône femelle de l'extrémité inférieure de la tige de commande vient s'emboîter sur le tronc de cône mâle au fond de la section tubulaire du sélecteur de température, de manière à fermer de manière étanche le premier clapet auxiliaire.

Selon une caractéristique particulière de l'invention, le second clapet auxiliaire est un joint torique disposé dans une gorge formée dans la surface latérale externe de la tige de commande.

Ainsi, lorsque la tige de commande est en position haute, le joint torique est en butée contre la face inférieure de l'orifice axial de la paroi horizontale supérieure du pot de temporisation, de manière à fermer de manière étanche le second clapet auxiliaire.

Selon une caractéristique particulière de l'invention, la partie inférieure du pot de temporisation reçoit un bouchon creux comportant une collerette qui vient en appui sur l'extrémité inférieure du pot de temporisation, la partie supérieure du bouchon creux pénétrant de façon étanche dans le pot de temporisation, ledit bouchon creux comportant un alésage axial qui enveloppe la section tubulaire du sélecteur de température, la face supérieure de la platine du sélecteur de température étant en contact avec un bourrelet annulaire situé sur la face inférieure du bouchon creux.

Ainsi, le bourrelet annulaire de la platine en contact avec la face inférieure du bouchon creux permet de minimiser la surface de frottement et donc le couple de rotation du sélecteur de température, ce qui permet de faciliter la rotation du bouton de commande par l'utilisateur.

Selon une caractéristique particulière de l'invention, la platine du sélecteur de température comporte, en tant qu'ouverture d'entrée de fluide, au moins une lumière continûment croissante puis décroissante en regard d'un siège d'arrivée d'eau froide et d'un siège d'arrivée d'eau chaude configurés pour être respectivement reliés à l'arrivée d'eau froide et l'arrivée d'eau chaude du robinet mitigeur, lesquels sièges d'arrivée d'eau froide et d'arrivée d'eau chaude sont maintenus en contact avec la face inférieure de la platine du sélecteur de température à l'aide de deux ressorts, l'au moins une lumière permettant de réduire ou d'augmenter le passage de l'eau froide ou de l'eau chaude lors de la rotation de la tige de commande. Ainsi, la lumière de ladite platine, en forme de sourire, sert de système d'obturation qui permet de réguler la température de l'eau mitigée en fonction de l'obturation des sièges d'arrivée d'eau froide et d'eau chaude par ladite lumière.

Selon une caractéristique particulière de l'invention, des cannelures sont ménagées dans l'alésage du bouchon creux pour permettre le passage de l'eau autour de la section tubulaire du sélecteur de température.

Ainsi, les dites cannelures du bouchon creux du sélecteur de température permettent le passage de l'eau dans le pot de temporisation depuis l'ouverture d'entrée de fluide de la platine.

Selon une caractéristique particulière de l'invention, la tige de commande creuse comprend un canal interne supérieur dans lequel est disposée une vis de réglage de débit, et un canal interne inférieur plus étroit que le canal interne supérieur, l'extrémité supérieure du canal interne inférieur ayant une forme conique pour former siège en regard de l'extrémité inférieure bombée ou conique de la vis de réglage de débit qui constitue le clapet de ce siège.

Ainsi, l'extrémité inférieure, également appelée nez, de la vis de réglage de débit se trouve plus ou moins en regard de l'au moins un orifice de sortie de la tige de commande en fonction du réglage de la position de la vis de réglage de débit dans le canal interne supérieur de la tige de commande.

Le réglage, par un technicien, de la position de la vis de réglage de débit à l'intérieur du canal interne supérieur de la tige de commande permet ainsi le réglage du débit d'eau à la sortie de l'au moins un orifice de sortie du mécanisme.

Selon une caractéristique particulière de l'invention, la face inférieure de la paroi horizontale supérieure du pot de temporisation comporte au moins une protubérance pour limiter la remontée du piston de temporisation dans le pot de temporisation.

Ainsi, l'au moins une protubérance permet d'éviter l'écrasement du second ressort de compression lors de la remontée du piston de temporisation dans le pot de temporisation.

La présente invention a également pour objet un robinet mitigeur pour douche ou lavabo intégrant un mécanisme à fermeture automatique temporisée tel que décrit ci-dessus. Ainsi, le mécanisme à fermeture automatique temporisée selon la présente invention, de préférence sous forme de cartouche, peut être installé, de manière amovible et interchangeable, dans un corps de forme généralement cylindrique du robinet mitigeur dans lequel débouchent en partie inférieure des arrivées d'eau froide et d'eau chaude et depuis lequel s'étend en partie supérieure une sortie d'eau mitigée.

De préférence, le corps de tête du mécanisme possède un filetage externe vissé dans un filetage interne ménagé en partie supérieure du corps du robinet mitigeur.

Pour mieux illustrer l'objet de la présente invention, on va en décrire ci-après, à titre illustratif et non limitatif, un mode de réalisation préféré, avec référence aux dessins annexés.

Sur ces dessins :
[Fig. 1] est une vue en coupe longitudinale d'un robinet mitigeur selon un mode de réalisation particulier de la présente invention, dans la position de repos de son mécanisme à fermeture automatique temporisée ;
[Fig. 2] est une vue en coupe longitudinale partielle du robinet mitigeur lorsque son bouton de commande est enfoncé ;
[Fig. 3] est vue en coupe longitudinale partielle du robinet mitigeur lorsque l'appui sur son bouton de commande est relâché ; et
[Fig. 4] est une vue en coupe transversale du mécanisme à fermeture automatique temporisée du robinet mitigeur au niveau de son sélecteur de température.

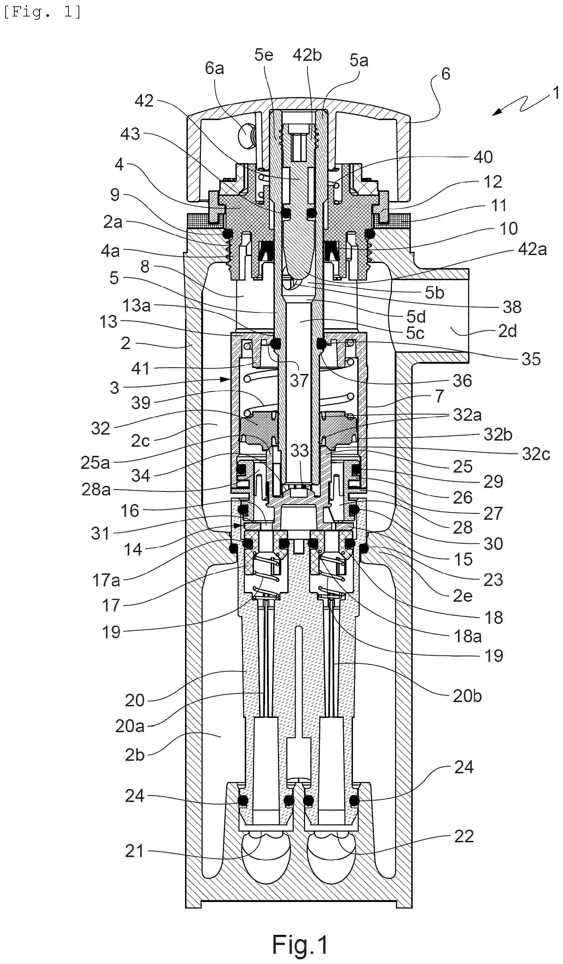

Si l'on se réfère aux Figures 1 à 4, on peut voir qu'il y est représenté un robinet mitigeur 1 pour lavabo selon un mode de réalisation particulier de la présente invention. Il est à noter que le robinet mitigeur 1 pourrait également prendre la forme d'un robinet mitigeur pour douche, sans s'écarter du cadre de la présente invention.

Le robinet mitigeur 1 comprend un corps de robinet 2 creux de forme sensiblement cylindrique dans lequel est installé, de manière amovible et interchangeable, un mécanisme à fermeture automatique temporisée 3 selon la présente invention.

Le mécanisme à fermeture automatique temporisée 3 comprend un corps de tête creux 4 à l'intérieur duquel est apte à coulisser axialement une tige de commande creuse 5 dont l'extrémité supérieure 5a débouche du corps de tête creux 4 pour recevoir un bouton de commande 6.

Le bouton de commande 6 possède un alésage latéral 6a pour permettre la fixation du bouton de commande 6 sur l'extrémité supérieure 5a de la tige de commande 5.

Le mécanisme 3 comprend en outre un pot de temporisation 7 disposé sous le corps de tête 4 et relié à celui-ci à l'aide d'une entretoise 8.

Le corps de tête 4 du mécanisme 3 possède un filetage externe 4a vissé dans un filetage interne 2a ménagé dans l'ouverture supérieure du corps 2 du robinet mitigeur 1, un joint torique 9 étant disposé entre l'ouverture supérieure du corps de robinet 2 et le corps de tête 4 du mécanisme 3. Un joint à lèvre 10 est disposé en partie inférieure du corps de tête 4, autour de la tige de commande 5.

Un anneau 11 est disposé sur la partie supérieure du corps de robinet 2, dans lequel est emboîtée une bague 12 sur laquelle repose la partie supérieure du corps de tête 4. De manière connue, l'anneau 11 et la bague 12 forment un boîtier réglable pour limiter la rotation du bouton de commande 6.

Le pot de temporisation 7 comprend, en partie supérieure, une paroi horizontale 13 ayant un orifice axial 13a traversé par la tige de commande 5.

Un sélecteur de température 14 est ménagé de manière étanche dans la partie inférieure du pot de temporisation 7, le sélecteur de température 14 comprenant, en partie inférieure, une platine 15 circulaire dans laquelle est formée une ouverture d'entrée de fluide 16 qui est en communication de fluide avec le pot de temporisation 7 et est configurée pour coopérer avec un siège d'arrivée d'eau chaude 17 et un siège d'arrivée d'eau froide 18 maintenus en contact avec la face inférieure de la platine 15 à l'aide de deux ressorts 19.

Les sièges d'arrivée d'eau chaude 17 et d'eau froide 18 et les deux ressorts 19 sont logés en partie supérieure d'un organe de liaison 20 comprenant un canal d'eau chaude 20a et un canal d'eau froide 20b, le canal d'eau chaude 20a reliant le siège d'arrivée d'eau chaude 17 à une arrivée d'eau chaude 21 située en partie inférieure du robinet mitigeur 1, et le canal d'eau froide 20b reliant le siège d'arrivée d'eau froide 18 à une arrivée d'eau froide 22 située en partie inférieure du robinet mitigeur 1.

Le corps 2 du robinet mitigeur 1 possède une chambre inférieure 2b dans laquelle est inséré l'organe de liaison 20 et une chambre supérieure 2c dans laquelle est inséré le mécanisme 3, les arrivées d'eau chaude 21 et d'eau froide 22 débouchant en partie inférieure de la chambre inférieure 2b du corps de robinet 2, et une sortie radiale d'eau mitigée 2d s'étendant depuis la chambre supérieure 2c du corps de robinet 2 au niveau de l'entretoise 8 du mécanisme 3.

Les chambres inférieure 2b et supérieure 2c du corps de robinet 2 sont délimitées par une collerette interne 2e ménagée à l'intérieur du corps de robinet 2, la partie supérieure de l'organe de liaison 20 reposant sur ladite collerette interne 2e.

Un joint torique 23 est disposé entre la collerette interne 2e et l'organe de liaison 20, et deux joints toriques 24 sont respectivement disposés entre les embouchures des canaux d'eau chaude 20a et d'eau froide 20b et les arrivées d'eau chaude 21 et d'eau froide 22.

Deux joints toriques 17a et 18a sont respectivement disposés entre les sièges d'arrivée d'eau chaude 17 et d'eau froide 18 et l'organe de liaison 20.

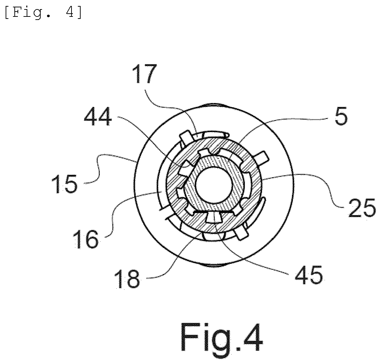

Le sélecteur de température 14 comprend en outre, en partie supérieure, une section tubulaire 25 comportant un crantage latéral interne 44 (visible en Figure 4).

La partie inférieure de la tige de commande 5 comprend un crantage latéral externe 45 (visible en Figure 4) en prise avec le crantage latéral interne 44 de la section tubulaire 25 du sélecteur de température 14 de telle sorte qu'une rotation de la tige de commande 5 entraîne la rotation du sélecteur de température 14.

La partie inférieure du pot de temporisation 7 reçoit un bouchon creux 26 comportant une collerette 27 qui vient en appui sur l'extrémité inférieure du pot de temporisation 7, la partie supérieure du bouchon creux 26 pénétrant de façon étanche dans le pot de temporisation 7 et la partie inférieure du bouchon creux 26 pénétrant de manière étanche dans la partie supérieure de l'organe de liaison 20, ledit bouchon creux 26 comportant un alésage axial 28 qui enveloppe la section tubulaire 25 du sélecteur de température 14.

Un joint torique 29 est disposé entre la partie supérieure du bouchon creux 26 et le pot de temporisation 7, et un joint torique 30 est disposé entre la partie inférieure du bouchon creux 26 et l'organe de liaison 20.

La face supérieure de la platine 15 du sélecteur de température 14 est en contact avec un bourrelet annulaire 31 situé sur la face inférieure du bouchon creux 26, de manière à minimiser la surface de frottement et donc le couple de rotation du sélecteur de température 14.

Des cannelures 28a sont ménagées dans l'alésage 28 du bouchon creux 26 pour permettre le passage de l'eau autour de la section tubulaire 25 du sélecteur de température 14. Le mécanisme 3 comprend en outre un piston de temporisation 32 monobloc en élastomère disposé dans le pot de temporisation 7 et apte à coulisser sur la tige de commande 5.

Le piston de temporisation 32 possède au moins une lèvre interne 32a (à titre d'exemple, une lèvre interne supérieure et une lèvre interne inférieure sur les Figures 1 à 3) en contact avec la surface latérale externe de la tige de commande 5 et une lèvre externe 32b en contact avec la surface latérale interne du pot de temporisation 7.

La face inférieure du piston de temporisation 32 possède un bourrelet annulaire 32c qui constitue un clapet principal en regard d'un siège principal ménagé sur l'extrémité supérieure 25a de la section tubulaire 25 du sélecteur de température 14.

La surface latérale intérieure du pot de temporisation 7 comporte une strie longitudinale (non visible sur les Figures) permettant de créer une fuite de fluide entre la chambre inférieure du pot de temporisation 7 au-dessous du piston de temporisation 32 et la chambre supérieure du pot de temporisation 7 au-dessus du piston de temporisation 32. Le mécanisme 3 comprend en outre un premier clapet auxiliaire 33 constitué par l'extrémité inférieure en forme de tronc de cône femelle de la tige de commande 5, le premier clapet auxiliaire 33 étant associé à un premier siège auxiliaire 34 en forme de tronc de cône mâle complémentaire formé dans le fond de la section tubulaire 25 du sélecteur de température 14.

Le crantage latéral interne 44 de la section tubulaire 25 du sélecteur de température 14 est conçu pour permettre un écoulement de fluide depuis le pot de temporisation 7 vers l'extrémité inférieure de la tige de commande 5 lorsque le clapet principal 32c et le premier clapet auxiliaire 33 sont ouverts.

Le mécanisme 3 comprend en outre un second clapet auxiliaire 35 de type joint torique disposé dans une gorge 36 formée dans la surface latérale externe de la tige de commande 5 à l'intérieur du pot de temporisation 7, le second clapet auxiliaire 35 étant associé à un second siège auxiliaire 37 formé sur la face inférieure de l'orifice axial 13a de la paroi horizontale supérieure 13 du pot de temporisation 7.

Un orifice radial de sortie 38 est ménagé dans la tige de commande 5 au niveau de l'entretoise 8 et permet un écoulement de fluide en provenance de l'intérieur de la tige de commande creuse 5 vers la sortie 2d du robinet mitigeur 1 lorsque le clapet principal 32c et le premier clapet auxiliaire 33 sont ouverts.

Un premier ressort de compression 40 est disposé entre le corps de tête 4 et le bouton de commande 6.

Un second ressort de compression 39 est disposé entre la paroi horizontale supérieure 13 du pot de temporisation 7 et la face supérieure du piston de temporisation 32.

La face inférieure de la paroi horizontale supérieure 13 du pot de temporisation 7 porte une protubérance 41 de type jupe annulaire pour limiter la remontée du piston de temporisation 32 dans le pot de temporisation 7, de manière à éviter l'écrasement du second ressort de compression 39. Tel que représenté en Figure 1, dans la position de repos du mécanisme à fermeture automatique temporisée 3, c'est-à-dire lorsqu'aucun appui n'est exercé sur le bouton de commande 6 du mécanisme 3, la tige de commande 5 est en position haute de telle sorte que le second clapet auxiliaire 35 est fermé et le premier clapet auxiliaire 33 est ouvert, et le clapet principal 32c est fermé (c'est-à-dire, que le piston de temporisation 32 en position basse dans le pot de temporisation 7) de telle sorte que le clapet principal 32c fermé empêche l'écoulement de fluide depuis le pot de temporisation 7 vers l'extrémité inférieure de la tige de commande 5. Aucun écoulement de fluide ne se produit donc à la sortie 2d du robinet mitigeur 1 dans la position de repos du mécanisme 3.

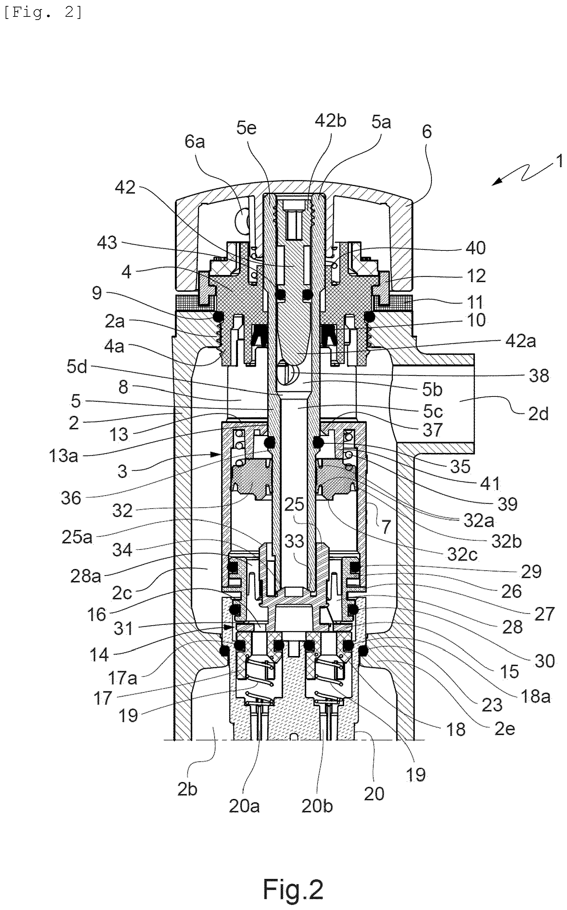

Tel que représenté en Figure 2, lorsqu'un utilisateur appuie sur le bouton de commande 6 du robinet mitigeur 1, la tige de commande 5 est entraînée en position basse de telle sorte que le second clapet auxiliaire 35 s'ouvre et le premier clapet auxiliaire 33 se ferme, l'ouverture du second clapet auxiliaire 35 provoquant une fuite d'amorçage et la remontée du piston de temporisation 32 dans le pot de temporisation 7, sous l'effet de la pression amont, jusqu'à venir en butée contre la protubérance 41 du pot de temporisation 7, de telle sorte que le bouton de commande 6 peut être facilement enfoncé par l'utilisateur avec un très faible effort de manoeuvre. La remontée du piston de temporisation 32 dans le pot de temporisation 7 entraîne ainsi l'ouverture du clapet principal 32c.

En outre, lorsque l'utilisateur maintient le bouton de commande 6 enfoncé, le premier clapet auxiliaire 33 reste fermé, empêchant ainsi l'écoulement de fluide depuis le pot de temporisation 7 vers l'orifice de sortie 38 de la tige de commande 5. Le mécanisme 3 possède ainsi un fonctionnement antiblocage, c'est-à-dire un fonctionnement dans lequel l'eau ne peut pas d'écouler du robinet mitigeur 1 tant que la tige de commande 5 reste enfoncée.

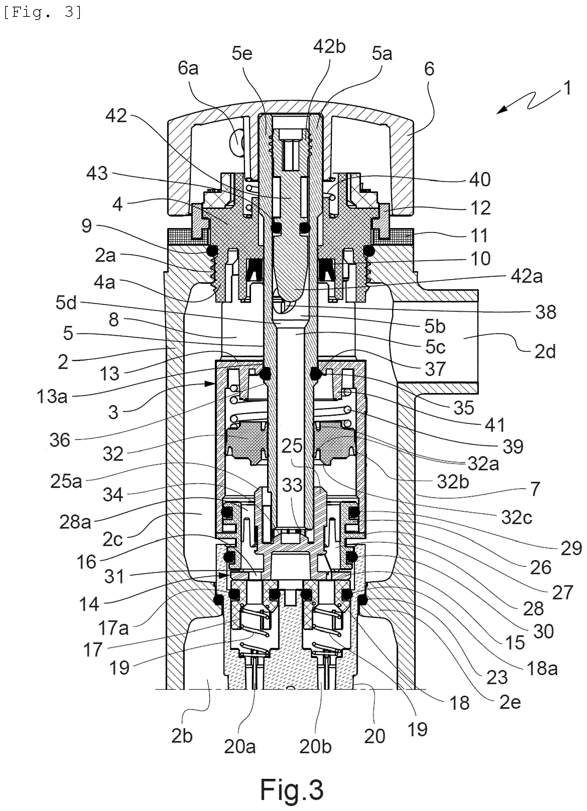

Tel que représenté en Figure 3, lorsque l'appui sur le bouton de commande 6 est relâché, la tige de commande 5 revient en position haute sous l'effet du premier ressort de compression 40 de telle sorte que le premier clapet auxiliaire 33 s'ouvre et le second clapet auxiliaire 35 se referme. L'eau provenant de l'ouverture d'entrée de fluide 16 de la platine 15 du sélecteur de température 14 peut alors s'écouler librement vers l'extrémité inférieure de la tige de commande 5, puis vers l'orifice de sortie 38 de la tige de commande 5 pour enfin s'écouler depuis la sortie d'eau mitigée 2d du robinet mitigeur 1. Le piston de temporisation 32 redescend alors progressivement dans le pot de temporisation 7 sous l'effet du second ressort de compression 39 en étant freiné par la fuite calibrée par la strie longitudinale de la surface latérale intérieure du pot de temporisation 7 en regard de la lèvre externe 32b, l'eau pouvant ainsi s'écouler dans la tige de commande 5 jusqu'à ce que le clapet principal 32c se referme en position basse du piston de temporisation 7, le mécanisme 3 revenant alors dans sa position de repos. Le mécanisme 3 selon la présente invention permet ainsi un écoulement de fluide pendant une période de temps prédéterminée.

Tel que représenté en Figure 4, l'ouverture d'entrée de fluide 16 de la platine 15 du sélecteur de température 14 est une lumière continûment croissante puis décroissante (c'est-à-dire, en forme de sourire) en regard du siège d'arrivée d'eau chaude 17 et du siège d'arrivée d'eau froide 18, ladite lumière permettant de réduire ou d'augmenter le passage de l'eau froide ou de l'eau chaude en fonction de la position angulaire de la platine 15 du sélecteur de température 14, ce qui permet de réguler la température de l'eau mitigée à la sortie 2d du robinet mitigeur 1 en fonction de l'obturation des sièges d'arrivée d'eau chaude 17 et d'eau froide 18 par ladite lumière.

La rotation dans le sens horaire ou antihoraire du bouton de commande 6, qui est solidaire de la tige de commande 5, par l'utilisateur entraîne la rotation de la tige de commande 5 qui elle-même entraîne la rotation du sélecteur de température 14. L'utilisateur peut ainsi régler la température de l'eau mitigée s'écoulant depuis la sortie 2d du robinet mitigeur en fonction de la position angulaire du bouton de commande 6.

Tel que représenté sur les Figures 1 à 3, la tige de commande creuse 5 comprend un canal interne supérieur 5b dans lequel est disposée une vis de réglage de débit 42, et un canal interne inférieur 5c plus étroit que le canal interne supérieur 5b, l'extrémité supérieure 5d du canal interne inférieur 5c ayant une forme conique pour former siège en regard de l'extrémité inférieure bombée 42a de la vis de réglage de débit 42 qui constitue le clapet de ce siège.

Ainsi, l'extrémité inférieure bombée 42a de la vis de réglage de débit 42 se retrouve plus ou moins en regard de l'orifice de sortie 38 de la tige de commande 5 en fonction du réglage de la position de la vis de réglage de débit 42 dans le canal interne supérieur 5b de la tige de commande 5, ce qui permet le réglage du débit d'eau à la sortie 2d du robinet mitigeur 1.

La partie supérieure de la vis de réglage de débit 42 possède un filetage externe 42b vissé dans un filetage interne 5e du canal interne supérieur 5b de la tige de commande 5, un joint torique 43 est disposé entre le canal interne supérieur 5b de la tige de commande 5 et une partie intermédiaire de la vis de réglage de débit 42. Un technicien peut ainsi régler le débit de sortie du robinet mitigeur 1 en vissant ou en dévissant la vis de réglage de débit 42 qui est accessible en désolidarisant le bouton de commande 6 de l'extrémité supérieure 5a de la tige de commande 5.

Il est bien entendu que le mode de réalisation particulier qui vient d'être décrit a été donné à titre indicatif et non limitatif, et que des modifications peuvent être apportées sans que l'on s'écarte pour autant de la présente invention, telle qu'elle est définie par les revendications.

## Revendications

1. Mécanisme à fermeture automatique temporisée (3) pour un robinet mitigeur (1), lequel mécanisme à fermeture automatique temporisée (3) comprend:
- un corps de tête creux (4) à l'intérieur duquel est apte à coulisser axialement une tige de commande creuse (5) dont l'extrémité supérieure (5a) débouche du corps de tête creux (4) pour recevoir un bouton de commande (6) ;
- un pot de temporisation (7) disposé sous le corps de tête (4) et relié à celui-ci à l'aide d'une entretoise (8), ledit pot de temporisation (7) comprenant, en partie supérieure, une paroi horizontale (13) ayant un orifice axial (13a) traversé par la tige de commande (5) ;
- un sélecteur de température (14) ménagé de manière étanche dans la partie inférieure du pot de temporisation (7), le sélecteur de température (14) comprenant, en partie inférieure, une platine (15) dans laquelle est formée au moins une ouverture d'entrée de fluide (16) qui est en communication de fluide avec le pot de temporisation (7) et est configurée pour coopérer avec une arrivée d'eau froide (22) et une arrivée d'eau chaude (21) du robinet mitigeur (1) de façon à mitiger la température de l'eau en fonction de la position angulaire de la platine (15) du sélecteur de température (14), ledit sélecteur de température (14) comprenant, en partie supérieure, une section tubulaire (25) avec un crantage latéral interne (44), la partie inférieure de la tige de commande (5) comprenant un crantage latéral externe (45) en prise avec le crantage latéral interne (44) de la section tubulaire (25) de telle sorte qu'une rotation de la tige de commande (5) entraîne la rotation du sélecteur de température (14) ;
- un piston de temporisation (32) monobloc en élastomère disposé dans le pot de temporisation (7) et apte à coulisser sur la tige de commande (5), ledit piston de temporisation (32) ayant au moins une lèvre interne (32a) en contact avec la surface latérale externe de la tige de commande (5) et une lèvre externe (32b) en contact avec la surface latérale interne du pot de temporisation (7), la face inférieure du piston de temporisation (32) ayant un bourrelet annulaire qui constitue un clapet principal (32c) en regard d'un siège principal (25a) ménagé sur l'extrémité supérieure de la section tubulaire (25) du sélecteur de température (14) ;
- un premier clapet auxiliaire (33) constitué par l'extrémité inférieure de la tige de commande creuse (5) et associé à un premier siège auxiliaire (34) formé dans le fond de la section tubulaire (25) du sélecteur de température (14), un passage étant ménagé dans le crantage latéral interne (44) de la section tubulaire (25) de manière à permettre un écoulement de fluide depuis le pot de temporisation (7) vers l'extrémité inférieure de la tige de commande (5) lorsque le clapet principal (32c) et le premier clapet auxiliaire (33) sont ouverts ;
- un second clapet auxiliaire (35) disposé sur la surface latérale externe de la tige de commande (5) à l'intérieur du pot de temporisation (7) et associé à un second siège auxiliaire (37) formé sur la face inférieure de l'orifice axial (13a) du pot de temporisation (7), de telle sorte qu'un appui sur le bouton de commande (6) solidaire de la tige de commande (5) entraîne l'ouverture du second clapet auxiliaire (35) et la fermeture du premier clapet auxiliaire (33), l'ouverture du second clapet auxiliaire (35) entraînant, sous l'effet de la pression amont, la remontée du piston de temporisation (32) dans le pot de temporisation (7) jusqu'à venir en butée contre la partie supérieure du pot de temporisation (7), et de telle sorte que, lorsque l'appui sur le bouton de commande (6) est relâché, un premier ressort de compression (40) disposé entre le corps de tête (4) et le bouton de commande (6) permet un retour de la tige de commande (5) dans sa position de repos dans laquelle le premier clapet auxiliaire (33) est ouvert et le second clapet auxiliaire (35) est fermé, puis un second ressort de compression (39) disposé entre la paroi horizontale supérieure (13) du pot de temporisation (7) et la face supérieure du piston de temporisation (32) permet un retour du piston de temporisation (32) sur le siège principal (25a) ; et
- au moins un orifice radial de sortie (38) ménagé dans la tige de commande (5) au niveau de l'entretoise (8) et permettant un écoulement du fluide en provenance de l'intérieur de la tige de commande creuse (5) vers une sortie de fluide (2d) du robinet mitigeur (1).

2. Mécanisme à fermeture automatique temporisée (3) selon la revendication 1, **caractérisé par le fait que** le premier siège auxiliaire (34) est un tronc de cône mâle placé au fond de la section tubulaire (25) du sélecteur de température (14), et le premier clapet auxiliaire (33) est un tronc de cône femelle situé à l'extrémité inférieure de la tige de commande creuse (5).

3. Mécanisme à fermeture automatique temporisée (3) selon la revendication 1 ou 2, **caractérisé par le fait que** le second clapet auxiliaire (37) est un joint torique disposé dans une gorge (36) formée dans la surface latérale externe de la tige de commande (5).

4. Mécanisme à fermeture automatique temporisée (3) selon l'une des revendications 1 à 3, **caractérisé par le fait que** la partie inférieure du pot de temporisation (7) reçoit un bouchon creux (26) comportant une collerette (27) qui vient en appui sur l'extrémité inférieure du pot de temporisation (7), la partie supérieure du bouchon creux (26) pénétrant de façon étanche dans le pot de temporisation (7), ledit bouchon creux (26) comportant un alésage axial (28) qui enveloppe la section tubulaire (25) du sélecteur de température (14), la face supérieure de la platine (15) du sélecteur de température (14) étant en contact avec un bourrelet annulaire (31) situé sur la face inférieure du bouchon creux (26).

5. Mécanisme à fermeture automatique temporisée (3) selon l'une des revendications 1 à 4, **caractérisé par le fait que** la platine (15) du sélecteur de température (14) comporte, en tant qu'ouverture d'entrée de fluide (16), au moins une lumière continûment croissante puis décroissante en regard d'un siège d'arrivée d'eau froide (18) et d'un siège d'arrivée d'eau chaude (17) configurés pour être respectivement reliés à l'arrivée d'eau froide (22) et l'arrivée d'eau chaude (21) du robinet mitigeur (1), lesquels sièges d'arrivée d'eau froide (18) et d'arrivée d'eau chaude (17) sont maintenus en contact avec la face inférieure de la platine (15) du sélecteur de température (14) à l'aide de deux ressorts (19), l'au moins une lumière permettant de réduire ou d'augmenter le passage de l'eau froide ou de l'eau chaude lors de la rotation de la tige de commande (5).

6. Mécanisme à fermeture automatique temporisée (3) selon la revendication 4 ou 5, **caractérisé par le fait que** des cannelures (28a) sont ménagées dans l'alésage (28) du bouchon creux (26) pour permettre le passage de l'eau autour de la section tubulaire (25) du sélecteur de température (14).

7. Mécanisme à fermeture automatique temporisée (3) selon l'une des revendications 1 à 6, **caractérisé par le fait que** la tige de commande creuse (5) comprend un canal interne supérieur (5b) dans lequel est disposée une vis de réglage de débit (42), et un canal interne inférieur (5c) plus étroit que le canal interne supérieur (5b), l'extrémité supérieure (5d) du canal interne inférieur (5c) ayant une forme conique pour former siège en regard de l'extrémité inférieure bombée ou conique (42a) de la vis de réglage de débit (42) qui constitue le clapet de ce siège.

8. Mécanisme à fermeture automatique temporisée (3) selon l'une des revendications 1 à 7, **caractérisé par le fait que** la face inférieure de la paroi horizontale supérieure (13) du pot de temporisation (7) comporte au moins une protubérance (41) pour limiter la remontée du piston de temporisation (32) dans le pot de temporisation (7).

9. Robinet mitigeur pour douche ou lavabo (1) intégrant un mécanisme à fermeture automatique temporisée (3) selon l'une des revendications 1 à 8.

## Patentansprüche

1. - Automatischer zeitgesteuerter Schließmechanismus (3) für eine Mischbatterie (1), wobei der automatische zeitgesteuerte Schließmechanismus (3) Folgendes umfasst:
- einen hohlen Kopfkörper (4), in dessen Inneren eine hohle Steuerstange (5) ausgelegt ist, um axial zu gleiten, deren oberes Ende (5a) aus dem hohlen Kopfkörper (4) austritt, um einen Steuerknopf (6) aufzunehmen;
- ein Timerkästchen (7), das unter dem Kopfkörper (4) angeordnet ist und mit diesem mit Hilfe eines Abstandhalters (8) verbunden ist, wobei das Timerkästchen (7) im oberen Teil eine horizontale Wand (13) umfasst, die ein axiales Loch (13a) aufweist, die von der Steuerstange (5) durchquert wird;
- einen Temperaturwähler (14), der auf dichte Weise im unteren Teil des Timerkästchens (7) angebracht ist, wobei der Temperaturwähler (14) im unteren Teil eine Platine (15) umfasst, in der mindestens eine Fluideingangsöffnung (16) gebildet ist, die in fluidischer Kommunikation mit dem Timerkästchen (7) ist und konfiguriert ist, um mit einem Kaltwassereintritt (22) und einem Warmwassereintritt (21) der Mischbatterie (1) zusammenzuarbeiten, um die Temperatur des Wassers je nach der Winkelposition der Platine (15) des Temperaturwählers (14) zu mischen, wobei der Temperaturwähler (14) im oberen Teil einen rohrförmigen Abschnitt (25) mit einer seitlichen inneren Rastung (44) umfasst, wobei der untere Teil der Steuerstange (5) eine seitliche äußere Rastung (45) umfasst, die mit der seitlichen inneren Rastung (44) des rohrförmigen Abschnitts (25) derart in Eingriff steht, dass eine Drehung der Steuerstange (5) die Drehung des Temperaturwählers (14) verursacht;
- einen einteiligen Timerkolben (32) aus Elastomer, die im Timerkästchen (7) angeordnet ist und ausgelegt ist, um auf der Steuerstange (5) zu gleiten, wobei der Timerkolben (32) mindestens eine interne Lippe (32a) aufweist, die in Kontakt mit der äußeren seitlichen Fläche der Steuerstange (5) ist, und eine äußere Lippe (32b), die in Kontakt mit der inneren seitlichen Fläche des Timerkästchens (7) ist, wobei die untere Fläche des Timerkolbens (32) einen ringförmigen Wulst aufweist, der eine Hauptklappe (32c) gegenüber einem Hauptsitz (25a) aufweist, der auf dem oberen Ende des rohrförmigen Abschnitts (25) des Temperaturwählers (14) angebracht ist;
- eine erste Hilfsklappe (33), die aus dem unteren Ende der hohlen Steuerstange (5) besteht und einem ersten Hilfssitz (34) zugewiesen ist, der am Boden des rohrförmigen Abschnitts (25) des Temperaturwählers (14) gebildet ist, wobei ein Durchgang in der inneren seitlichen Rastung (44) des rohrförmigen Abschnitts (25) angebracht ist, um das Abfließen von Fluid aus dem Timerkästchen (7) hin zum unteren Ende der Steuerstange (5) zu ermöglichen, wenn die Hauptklappe (32c) und die erste Hilfsklappe (33) geöffnet sind;
- eine zweite Hauptklappe (35), die auf der äußeren seitlichen Fläche der Steuerstange (5) im Inneren des Timerkästchens (7) angeordnet ist und einem zweiten Hilfssitz (37) zugewiesen ist, der auf der unteren Fläche des axialen Lochs (13a) des Timerkästchens (7) gebildet ist, so dass durch Drücken auf den Steuerknopf (6), der einstückig mit der Steuerstange (5) ist, die Öffnung der zweiten Hilfsklappe (35) und die Schließung der ersten Hilfsklappe (33) verursacht, wobei die Öffnung der zweiten Hilfsklappe (35) unter der Einwirkung des vorgelagerten Drucks den erneuten Anstieg des Timerkolbens (32) im Timerkästchen (7) zur Folge hat, bis er gegen den oberen Teil des Timerkästchens (7) anliegt, und derart dass, wenn das Drücken auf den Steuerknopf (6) nachlässt, eine erste Druckfeder (40), die zwischen dem Kopfkörper (4) und dem Steuerknopf (6) angeordnet ist, eine Rückkehr der Steuerstange (5) in ihre Ruheposition ermöglicht, in der die erste Hilfsklappe (33) geöffnet ist und die zweite Hilfsklappe (35) geschlossen ist, dann eine zweite Druckfeder (39), die zwischen der horizontalen oberen Wand (13) des Timerkästchens (7) und der oberen Fläche des Timerkolbens (32) angeordnet ist, eine Rückkehr des Timerkolbens (32) auf den Hauptsitz (25a) ermöglicht; und
- mindestens ein radiales Ausgangsloch (38), das in der Steuerstange (5) auf der Ebene des Abstandhalters (8) angeordnet ist und ein Ablaufen des Fluids vom Inneren der hohlen Steuerstange (5) hin zum Fluidausgang (2d) der Mischbatterie (1) ermöglicht.

2. - Automatischer zeitgesteuerter Schließmechanismus (3) nach Anspruch 1, **dadurch gekennzeichnet, dass** der erste Hilfssitz (34) ein positiver Kegelstumpf ist, der am Boden des rohrförmigen Abschnitts (25) des Temperaturwählers (14) platziert ist, und die erste Hilfsklappe (33) ein negativer Kegelstumpf ist, der sich am unteren Ende der hohlen Steuerstange (5) befindet.

3. - Automatischer zeitgesteuerter Schließmechanismus (3) nach Anspruch 1 oder 2, **dadurch gekennzeichnet, dass** die zweite Hauptklappe (37) ein O-Ring ist, der in einer Aussparung (36) angeordnet ist, die in der äußeren seitlichen Fläche der Steuerstange (5) gebildet ist.

4. - Automatischer zeitgesteuerter Schließmechanismus (3) nach einem der Ansprüche 1 bis 3, **dadurch gekennzeichnet, dass** der untere Teil des Timerkästchens (7) einen hohlen Stopfen (26) aufnimmt, umfassend einen Kragen (27), der auf dem unteren Ende des Timerkästchens (7) aufliegt, wobei der obere Teile des hohlen Stopfens (26) auf dichte Weise in das Timerkästchen (7) eindringt, wobei der hohle Stopfen (26) eine hohle Bohrung (28) umfasst, die den rohrförmigen Abschnitt (25) des Temperaturwählers (14) umgibt, wobei die obere Fläche der Platine (15) des Temperaturwählers (14) in Kontakt mit einem ringförmigen Wulst (31) ist, der sich auf der unteren Fläche des hohlen Stopfens (26) befindet.

5. - Automatischer zeitgesteuerter Schließmechanismus (3) nach einem der Ansprüche 1 bis 4, **dadurch gekennzeichnet, dass** die Platine (15) des Temperaturwählers (14) als Fluideingangsöffnung (16) mindestens einen kontinuierlichen anwachsenden, dann abnehmenden Zugang gegenüber einem Kaltwassereintrittssitz (18) und einem Warmwassereintrittssitz (17) umfasst, die konfiguriert sind, um mit dem Kaltwassereintritt (22) bzw. dem Warmwassereintritt (21) der Mischbatterie (1) verbunden zu sein, wobei der Kaltwassereintrittssitz (18) und der Warmwassereintrittssitz (17) in Kontakt mit der unteren Fläche der Platine (15) des Temperaturwählers (14) mit Hilfe von zwei Federn (19) gehalten werden, wobei mindestens ein oben gennanter Zugang ermöglicht, den Durchgang des Kaltwassers oder des Warmwassers bei Drehung der Steuerstange (5) zu reduzieren oder zu erhöhen.

6. - Automatischer zeitgesteuerter Schließmechanismus (3) nach Anspruch 4 oder 5, **dadurch gekennzeichnet, dass** Rillen (28a) in der Bohrung (28) des hohlen Stopfens (26) angebracht sind, um den Durchgang von Wasser um den rohrförmigen Abschnitt (25) des Temperaturwählers (14) herum zu ermöglichen.

7. - Automatischer zeitgesteuerter Schließmechanismus (3) nach einem der Ansprüche 1 bis 6, **dadurch gekennzeichnet, dass** die hohle Steuerstange (5) einen oberen inneren Kanal (5b) umfasst, in dem eine Schraube zur Einstellung des Durchsatzes (42) angeordnet ist, und einen unteren inneren Kanal (5c), der enger als der obere inneren Kanal (5b) ist, wobei das obere Ende (5d) des unteren inneren Kanals (5c) eine konische Form aufweist, um einen Sitz gegenüber dem gewölbten oder konischen unteren Ende (42a) der Schraube zur Einstellung des Durchsatzes (42), der die Klappe dieses Sitzes darstellt, zu bilden.

8. - Automatischer zeitgesteuerter Schließmechanismus (3) nach einem der Ansprüche 1 bis 7, **dadurch gekennzeichnet, dass** die untere Fläche der oberen horizontalen Wand (13) des Timerkästchens (7) mindestens einen Vorsprung (41) umfasst, um den erneuten Anstieg des Timerkolbens (32) im Timerkästchen (7) zu begrenzen.

9. - Mischbatterie für Dusche oder Waschbecken (1), die einen automatischen zeitgesteuerten Schließmechanismus (3) nach einem der Ansprüche 1 bis 8 einschließt.

## Claims

1. - A timed self-closing mechanism (3) for a mixer tap (1), which timed self-closing mechanism (3) comprises :
- a hollow head body (4) in which a hollow control rod (5) is adapted to slide axially, the upper end (5a) of which opens out from the hollow head body (4) to receive a control knob (6) ;
- a timing box (7) located under the head body (4) and connected thereto by means of a spacer (8), said timing box (7) comprising, in its upper part, a horizontal wall (13) having an axial orifice (13a) through which the control rod (5) passes;
- a temperature selector (14) arranged in a sealed manner in the lower part of the timing box (7), the temperature selector (14) comprising, in its lower part, a plate (15) in which is formed at least one fluid inlet opening (16) which is in fluid communication with the timing box (7) and is configured to cooperate with a cold water inlet (22) and a hot water inlet (21) of the mixer tap (1) so as to mix the temperature of the water according to the angular position of the plate (15) of the temperature selector (14), said temperature selector (14) comprising, in its upper part, a tubular section (25) with an inner lateral notching (44), the lower part of the control rod (5) comprising an outer lateral notching (45) engaged with the inner lateral notching (44) of the tubular section (25) so that a rotation of the control rod (5) causes the rotation of the temperature selector (14);
- a one-piece elastomer timing piston (32) arranged in the timing box (7) and adapted to slide on the control rod (5), said timing piston (32) having at least one inner lip (32a) in contact with the outer lateral surface of the control rod (5) and an outer lip (32b) in contact with the inner lateral surface of the timing box (7), the lower face of the timing piston (32) having an annular bead which constitutes a main valve (32c) facing a main seat (25a) provided on the upper end of the tubular section (25) of the temperature selector (14);
- a first auxiliary valve (33) constituted by the lower end of the hollow control rod (5) and associated with a first auxiliary seat (34) formed in the bottom of the tubular section (25) of the temperature selector (14), a passage being provided in the inner lateral notching (44) of the tubular section (25) so as to allow a fluid flow from the timing box (7) to the lower end of the control rod (5) when the main valve (32c) and the first auxiliary valve (33) are open;
- a second auxiliary valve (35) arranged on the outer lateral surface of the control rod (5) inside the timing box (7) and associated with a second auxiliary seat (37) formed on the lower face of the axial orifice (13a) of the timing box (7), so that a pressure on the control knob (6) integral with the control rod (5) causes the second auxiliary valve (35) to open and the first auxiliary valve (33) to close, the opening of the second auxiliary valve (35) causing, under the effect of the upstream pressure, the timing piston (32) to rise in the timing box (7) until it comes into abutment against the upper part of the timing box (7), and so that, when the pressure is released on the control knob (6), a first compression spring (40) arranged between the head body (4) and the control knob (6) allows the control rod (5) to return to its rest position in which the first auxiliary valve (33) is open and the second auxiliary valve (35) is closed, then a second compression spring (39) arranged between the upper horizontal wall (13) of the timing box (7) and the upper face of the timing piston (32) allows the timing piston (32) to return to the main seat (25a) ; and
- at least one radial outlet orifice (38) provided in the control rod (5) at the spacer (8) and allowing a fluid flow from the inside of the hollow control rod (5) to a fluid outlet (2d) of the mixer tap (1).

2. - A timed self-closing mechanism (3) according to claim 1, **characterized in that** the first auxiliary seat (34) is a male cone frustum located at the bottom of the tubular section (25) of the temperature selector (14), and the first auxiliary valve (33) is a female cone frustum located at the lower end of the hollow control rod (5).

3. - A timed self-closing mechanism (3) according to claim 1 or 2, **characterized in that** the second auxiliary valve (37) is an O-ring arranged in a groove (36) formed in the outer lateral surface of the control rod (5).

4. - A timed self-closing mechanism (3) according to one of claims 1 to 3, **characterized in that** the lower part of the timing box (7) receives a hollow plug (26) comprising a collar (27) which rests on the lower end of the timing box (7), the upper part of the hollow plug (26) penetrating in a sealed manner into the timing box (7), said hollow plug (26) comprising an axial bore (28) which surrounds the tubular section (25) of the temperature selector (14), the upper face of the plate (15) of the temperature selector (14) being in contact with an annular bead (31) provided on the lower face of the hollow plug (26).

5. - A timed self-closing mechanism (3) according to one of claims 1 to 4, **characterized in that** the plate (15) of the temperature selector (14) comprises, as a fluid inlet opening (16), at least one hole continuously increasing then decreasing opposite a cold water inlet seat (18) and a hot water inlet seat (17) configured to be respectively connected to the cold water inlet (22) and the hot water inlet (21) of the mixer tap (1), said cold water inlet seat (18) and hot water inlet seat (17) are held in contact with the lower face of the plate (15) of the temperature selector (14) by means of two springs (19), the at least one hole allowing the passage of cold or hot water to be reduced or increased when the control rod (5) is rotated.

6. - A timing self-closing mechanism (3) according to claim 4 or 5, **characterized in that** splines (28a) are provided in the bore (28) of the hollow plug (26) to allow the passage of water around the tubular section (25) of the temperature selector (14).

7. - A timing self-closing mechanism (3) according to one of claims 1 to 6, **characterized in that** the hollow control rod (5) comprises an upper inner channel (5b) in which a flow adjustment screw (42) is arranged, and a lower inner channel (5c) narrower than the upper inner channel (5b), the upper end (5d) of the lower inner channel (5c) having a conical shape to form a seat facing the domed or conical lower end (42a) of the flow adjustment screw (42) which constitutes the valve of this seat.

8. - A timing self-closing mechanism (3) according to one of claims 1 to 7, **characterized in that** the lower face of the upper horizontal wall (13) of the timing box (7) comprises at least one protuberance (41) to limit the rise of the timing piston (32) in the timing box (7).

9. - A shower or washbasin mixer tap (1) incorporating a timed self-closing mechanism (3) according to one of claims 1 to 8.
